# EUROPÄISCHE PATENTSCHRIFT

(11) **EP 1 593 237 B1**
(45) Veröffentlichungstag und Bekanntmachung des Hinweises auf die Patenterteilung: **29.11.2006**
(21) Anmeldenummer: 04704573.7
(22) Anmeldetag: 23.01.2004
(51) Int. Cl.: H04L 12/56

(54) **VERFAHREN ZUR ÜBERTRAGUNGSBANDBREITENZUTEILUNG IN EINER PAKE TORIENTIERTEN KOMMUNIKATIONSEINRICHTUNG**
METHOD FOR ALLOCATING TRANSMISSION BANDWIDTH IN A PACKET-ORIENTED COMMUNICATIONS FACILITY
PROCEDE D'ATTRIBUTION DE BANDE PASSANTE D'EMISSION DANS UN SYSTEME DE COMMUNICATION ORIENTE PAQUETS

(30) Priorität: 14.02.2003 DE 10306293
(43) Veröffentlichungstag der Anmeldung: 09.11.2005
(73) Patentinhaber: SIEMENS AKTIENGESELLSCHAFT, 80333 München (DE)
(72) Erfinder: BRANDENBURG, Stephan, 82110 Germering (DE); TREYER, Thomas, 81379 München (DE); VEITS, Oliver, 85221 Dachau (DE)
(86) Internationale Anmeldenummer: PCT/EP2004/000578
(87) Internationale Veröffentlichungsnummer: WO 2004/073265

(56) Entgegenhaltungen:
- US-B1- 6 247 061
- CHIRUVOLU G ET AL: "An efficient edge-based congestion management for a differentiated services domain" COMPUTER COMMUNICATIONS AND NETWORKS, 2000. PROCEEDINGS. NINTH INTERNATIONAL CONFERENCE ON LAS VEGAS, NV, USA 16-18 OCT. 2000, PISCATAWAY, NJ, USA,IEEE, US, 16. Oktober 2000 (2000-10-16), Seiten 75-80, XP010524490 ISBN: 0-7803-6494-5

## Beschreibung

Verfahren zur Übertragungsbandbreitenzuteilung in einer paketorientierten Kommunikationseinrichtung

In paketorientierten Kommunikationssystemen werden Datenpakete mit unterschiedlichen Prioritäten übertragen, wodurch Netzbetreiber die Übertragungsmenge sowie Übertragungsrate innerhalb des paketorientierten Kommunikationssystems steuern können. Hierbei ist es erforderlich, daß die einem Kunden zugesicherte Übertragungsbandbreite langfristig sichergestellt ist. Hierzu sind unterschiedliche Verfahren zur Übertragungsbandbreitenzuteilung und -begrenzung bekannt, mit deren Hilfe eine zugesicherte Übertragungsbandbreite überwacht werden kann. Unter anderem werden derartige "Traffic Shaping"-Verfahren zur Steuerung der Weiterverarbeitung von Datenpaketen in paketorientierten Kommunikationseinrichtungen eingesetzt, wodurch Netzüberlasten vermieden werden können. Prinzipiell sind zwei grundsätzliche "Traffic Shaping" Verfahren bekannt:

Das Leaky-Bucket-Verfahren, mit dessen Hilfe Übertragungsspitzen ("bursts") des jeweiligen Datenpaketstromes eliminiert werden und hierdurch die Übertragungsrate unterhalb einer Obergrenze gehalten wird.

Das Token-Bucket-Verfahren, mit dessen Hilfe auf lange Sicht die durchschnittliche Übertragungsbandbreite geregelt wird, wobei durchaus über der durchschnittlichen Übertragungsbandbreite liegende Datenbursts zugelassen werden.

Das dokument "An Efficient Edge-based Congestion Management for a Differentiated Services Domain", Girish Chiruvolu, offenbart ein derartiges "Traffic shaping" Token bucket Verfahren.

In dem White Paper "Internet Processor II ASIC: Rate-limiting and Traffic-policing Features" von Juniper Networks, Inc., 2000, sind sowohl das Leaky-Bucket-Verfahren als auch das Token-Bucket-Verfahren beschrieben. Bei dem Token-Bucket-Bandbreitenbegrenzungsverfahren werden mit Hilfe eines Token-Generators ständig Datenmengen-Token bzw. kurz Token mit einer konstanten Rate erzeugt und diese in einer Token-Bucket-Einheit abgelegt, wobei hierbei die abgelegte Anzahl von Datenmengen-Token eine festgelegten zuteilbaren Datenmenge entspricht. Jeder dieser Datenmengen-Token ermöglicht gesteuert über eine Regeleinheit die Übertragung einer festgelegten Anzahl von Datenbytes. Solange die Token-Bucket-Einheit die hierfür erforderliche Anzahl von Datenmengen-Tokens aufweist, können unterschiedliche Längen aufweisende Datenpakete weiterverarbeitet werden. Zur Übertragung eines Datenpaktes mit einer Länge von 8 Datenmengen-Token ist beispielsweise eine Datenmenge von 8 Datenmengen-Token durch die Regeleinheit der Token-Bucket-Einheit zu entnehmen. Beim Überlauf der Token-Bucket-Einheit, d.h. es werden durch den Token-Generator mehr Datenmengen-Token erzeugt als in der Token-Bucket-Einheit abgelegt werden können, werden die zuviel erzeugten Datenmengen-Token verworfen. Durch die maximale Aufnahmefähigkeit an Datenmengen-Token wird die Länge der durch die Token-Bucket-Einheit verarbeitbare Datenbursts festgelegt.

Ein nach dem Token-Bucket-Verfahren realisierter Bandbreitenbegrenzer berücksichtigt bei der Weiterverarbeitung von Datenpaketen unterschiedliche Faktoren. Einer der Faktoren ist beispielsweise die Anzahl der Datenbytes eines Datenpaketes. Zur erfolgreichen Weiterverarbeitung dieses Datenpaketes beispielsweise einer Länge von P Datenmengen-Token ist es erforderlich, daß die der Länge des weiterzuleitenden Datenpakets entsprechende Anzahl von Datenmengen-Token und somit die entsprechende Übertragungsbandbreite in der Token-Bucket-Einheit zur Verfügung steht. Bei der Weiterverarbeitung dieses Datenpaketes wird die entsprechende Anzahl von Datenmengen-Token aus der Token-Bucket-Einheit entnommen und hierdurch der "Füllstand" der Token-Bucket-Einheit um P Datenmengen-Token reduziert. Im Falle, daß die Token-Bucket-Einheit keine oder nicht ausreichend viele, für die Weiterverarbeitung erforderliche Datenmengen-Token aufweist, wird das Datenpaket solange in einer Speichereinheit zwischengespeichert, bis die durch die Token-Generatoreinheit erzeugten weiteren Datenmengen-Token ausreichen, um die erforderliche Übertragungsbandbreite zur Verfügung zu stellen.

Die durch das Token-Bucket-Verfahren zu überwachende Übertragungsbandbreite wird hierbei durch die im Token-Generator eingestellte konstante Erzeugungsrate der Datenmengen-Token festgelegt.

Die technische Realisierung eines auf dem Token-Bucket-Verfahren basierenden Bandbreitenbegrenzers erfordert insbesondere bei mehreren, unterschiedliche Übertragungsbandbreiten überwachenden Bandbreitenbegrenzern einen hohen Hardwaresowie Rechenaufwand, da ständig eine konstante Rate an Datenmengen-Token erzeugt werden muß. Hierzu sind umfangreiche, kostenintensive Rechnerressourcen oder entsprechende Hardwareeinheiten erforderlich.

Die Aufgabe der vorliegenden Erfindung ist darin zu sehen, ein neuartiges Verfahren zur Übertragungsbandbreitenzuteilung in einer paketorientierten Kommunikationseinrichtung anzugeben, das mit einem verringerten technischen Rechenaufwand realisierbar ist.

Die Aufgabe wird durch die Merkmale des Patentanspruches 1 gelöst.

Der wesentliche Vorteil des erfindungsgemäßen Verfahrens zur Übertragungsbandbreitenzuteilung besteht darin, daß in einer paketorientierten Kommunikationseinrichtung, die mindestens eine aus einer Time-Bucket-Einheit und einer Byte-Credit-Einheit bestehende Token-Bucket-Einheit aufweist, in der Byte-Credit-Einheit jeweils eine festgelegte Datenmenge repräsentierende Datenmengen-Token gespeichert sind. Hierbei werden der Time-Bucket-Einheit ein Tokenerzeugungszeitintervall und ein Tokenerzeugungszeitpunkt zugeordnet. Ferner wird jedem Datenpaket vor der Weiterverarbeitung ein Verarbeitungszeitpunkt zugeordnet und in der Time-Bucket-Einheit für die Weiterverarbeitung eines Datenpaketes verfügbare Übertragungszeitintervall ermittelt. Ausschließlich bei einem Überschreiten des Tokenerzeugungszeitintervalls durch das ermittelte verfügbare Übertragungszeitintervall wird ein Teil des verfügbaren Übertragungszeitintervalls in Datenmengen-Token umgewandelt, diese in der Byte-Credit-Einheit gespeichert sowie der Tokenerzeugungszeitpunkt aktualisiert. Schließlich wird die zur Weiterverarbeitung des Datenpaketes erforderliche Datenmenge derart zugeteilt, daß die der Datenmenge entsprechende Anzahl von Datenmengen-Token der Byte-Credit-Einheit entnommen werden.

Die Differenz aus dem Verarbeitungszeitpunkt und dem Tokenerzeugungszeitpunkt definiert hierbei besonders vorteilhaft das verfügbare Übertragungszeitintervall bzw. den für die Weiterverarbeitung des Datenpaketes relevanten Füllstand der Time-Bucket-Einheit. Des weiteren ist für die Time-Bucket-Einheit ein Tokenerzeugungszeitintervall definiert, das einer entsprechende Anzahl an Datenmengen-Token auf Seiten der Byte-Credit-Einheit zugeordnet ist, wodurch die gewünschte Übertragungsbandbreite festgelegt wird. Nur wenn in der Byte-Credit-Einheit nicht genügend Datenmengen-Token für das aktuell zu verarbeitende Datenpaket verfügbar sind und wenn gleichzeitig das verfügbare Übertragungszeitintervall größer als das Tokenerzeugungszeitintervall ist, wird ein Teil des verfügbaren Übertragungszeitintervalls von der Größe des Tokenerzeugungszeitintervalls in die entsprechende Menge Datenmengen-Token umgewandelt, diese in der Byte-Credit-Einheit gespeichert sowie der Tokenerzeugungszeitpunkt entsprechend des entnommenen Zeitintervalls aktualisiert. Dieser Schritt kann, je nach gewählten Werten für Tokenerzeugungszeitintervall und die entsprechende Menge Datenmengen-Token, auch mehrfach ausgeführt werden. In der Time-Bucket-Einheit wird somit besonders vorteilhaft mit Hilfe von Zeitdifferenzberechnungen überprüft, ob ein Auffüllen der Token-Bucket-Einheit bzw. der Byte-Credit-Einheit zur Weiterverarbeitung des Datenpaketes erforderlich ist. Im Anschluß daran wird die Zuteilung der für die Weiterverarbeitung eines Datenpaketes erforderlichen Datenmenge über die Byte-Credit-Einheit durchgeführt. Hierbei erfolgt eine Trennung der Zuteilung der eigentlichen Datenmenge anhand der Datenmengen-Token von der Ermittlung des verfügbaren Übertragungszeitintervalls anhand der Time-Bucket-Einheit. Vorteilhaft werden ausschließlich bei einem Überschreiten des Tokenerzeugungszeitintervalls durch das verfügbare Übertragungszeitintervall weitere Datenmengen-Token erzeugt, d.h. die noch _{"}unverbrauchte" Übertragungszeit einer Verbindung mit einer fest zugeordneten Übertragungsbandbreite wird ermittelt und in eine zuteilbare Datenmenge in Form von Datenmengen-Token umgewandelt. Diese wiederum wird für die Weiterverarbeitung den jeweiligen Datenpaketen zugeteilt. Hierdurch werden die Rechnerressourcen innerhalb des paketorientierten Kommunikationseinrichtung ausschließlich dann mit zum Auffüllen der Token-Bucket-Einheit bzw. der Byte-Credit-Einheit erforderlichen Rechenoperationen belastet, wenn die Weiterverarbeitung eines oder mehrerer Datenpakete dies erfordert. Hierdurch wird eine ressourcenschonende Verarbeitung von Datenpakten aus unterschiedlichen Verbindungen mit unterschiedlichen Übertragungsbitraten ermöglicht.

Vorteilhaft wird das verfügbare Übertragungszeitintervall durch Bildung der Zeitdifferenz zwischen Verarbeitungszeitpunkt und Tokenerzeugungszeitpunkt ermittelt. Hierdurch wird die Zuteilung einer vorgegebenen Übertragungsrate mit Hilfe von einfachen Additions- bzw. Subtraktionsoperationen realisiert. Rechenaufwendige Multiplikations- und Divisionsoperationen können dadurch vermieden werden. Beispielsweise wird die zulässige Größe eines Datenbursts durch die Begrenzung des verfügbaren Übertragungszeitintervalls realisiert. Dies wird insbesondere dadurch erreicht, dass vor oder nach dem Verarbeiten eines Datenpaketes die Größe des verfügbaren Übertragungszeitintervalls auf Überschreitung eines zuvor definierten Wertes überprüft wird und anschließend ggf. der Tokenerzeugungszeitpunkt entsprechend angepasst wird.

Ein weitere Aspekt der Erfindung ist darin zu sehen, daß bei der Umwandlung eines Teiles des verfügbaren Übertragungszeitintervalls in Datenmengen-Token der Tokenerzeugungszeitpunkt dadurch aktualisiert wird, daß zum Tokenerzeugungszeitpunkt das Tokenerzeugungszeitintervall addiert wird. Durch die erfindungsgemäße Umwandlung von verfügbarer Übertragungszeit in eine Datenmenge repräsentieren Datenmengen-Token wird sichergestellt, daß in der Byte-Credit-Einheit die in der Time-Bucket-Einheit durch ein Übertragungszeitintervall repräsentierte verfügbare Datenmenge für die Zuteilung an die Datenpakete im Zuge der Weiterverarbeitung zur Verfügung steht.

Ein weiterer Vorteil ist darin zu sehen, daß bei mehreren in der paketorientierten Kommunikationseinrichtung vorgesehenen Token-Bucket-Einheiten jeder Token-Bucket-Einheit ein übertragungsbandbreitenindividuelles Tokenerzeugungszeitintervall zugeordnet wird. Hierdurch kann besonders vorteilhaft jeder einzelnen Token-Bucket-Einheit eine individuelle maximale Übertragungsbandbreite zugeordnet werden.

Weitere vorteilhafte Ausgestaltungen der Erfindung sind in den weiteren Unteransprüchen beschrieben.

Die Erfindung wird anhand mehrerer Ausführungsbeispiele mit Hilfe von einem Blockschaltbild sowie mehreren Ablaufdiagrammen näher erläutert.
- Figur 1: zeigt in einem Blockschaltbild eine paketorientierte Kommunikationseinrichtung, in der das erfindungsgemäße Verfahren zur Übertragungsbandbreitenzuteilung realisiert ist,
- Figur 2: zeigt in einem Ablaufdiagramm die Realisierung des erfindungsgemäßen Verfahrens mit Hilfe einer Bewertungsroutine, und
- Figur 3a/b: zeigt in einem Diagramm beispielhaft die Weiterverarbeitung von zu unterschiedlichen Zeitpunkten ankommenden Datenpaketen.

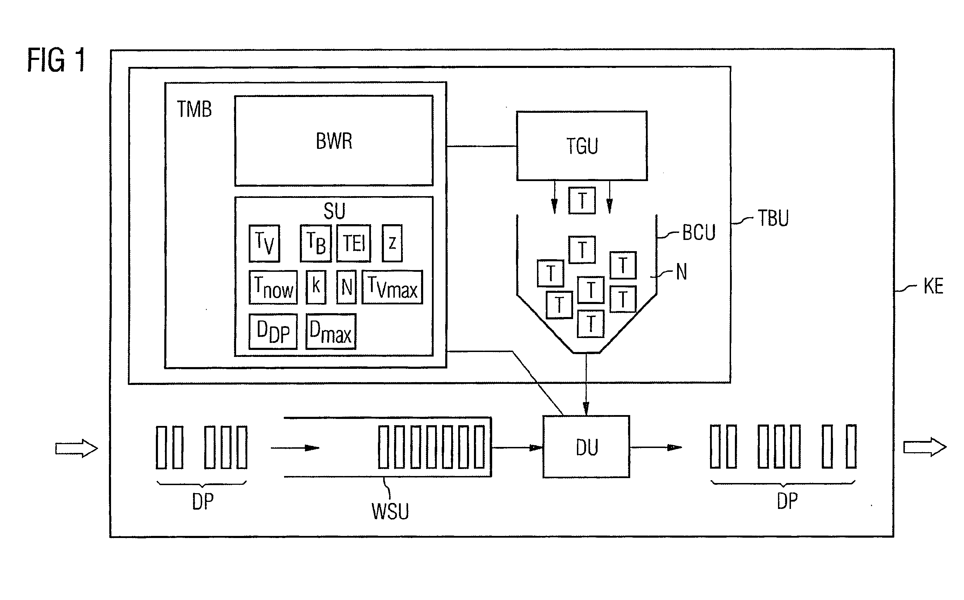

In Figur 1 ist beispielhaft in einem Blockschaltbild eine mögliche Realisierung des erfindungsgemäßen Verfahrens zur Übertragungsbandbreitenzuteilung in einer paketorientierten Kommunikationseinrichtung KE dargestellt. In Figur 1 ist eine Token-Bucket-Einheit TBU mit einer Time-Bucket-Einheit TMB, einer Tokenerzeugungseinheit TGU, und einer Byte-Credit-Einheit BCU dargestellt. Zusätzlich weist die paketorientierte Kommunikationseinrichtung KE beispielhaft eine Warteschlangeneinheit WSU sowie eine Weiterverarbeitungseinrichtung DU auf. In der Time-Bucket-Einheit TMB sind eine Bewertungsroutine BWR und eine Speichereinheit SU angeordnet, wobei die Time-Bucket-Einheit TMB mit der Tokenerzeugungseinheit TGU und der Weiterverarbeitungseinrichtung DU verbunden ist. Die Weiterverarbeitungseinrichtung DU ist mit der Warteschlangeneinheit WSU sowie mit der Token-Bucket-Einheit TBU bzw. insbesondere der Byte-Credit-Einheit BCU verbunden.

Die an der Kommunikationseinrichtung KE ankommenden Datenpakete DP werden in der paketorientierten Kommunikationseinrichtung KE an beispielsweise die Warteschlangeneinheit WSU gesteuert, in der diese vor Ihrer Weiterverarbeitung durch die Weiterverarbeitungseinrichtung DU zwischengespeichert werden. In Figur 1 ist beispielhaft eine Warteschlangeneinheit WSU dargestellt. In herkömmlichen Kommunikationseinrichtungen KE werden überlicherweise eine Vielzahl derartiger Warteschlangeneinheiten WSU vorgesehen, wobei auch die Zuordnung von einer Warteschlangeneinheit WSU zu mehreren Token-Bucket-Einheiten TBU möglich ist. Alternativ oder zusätzlich können ebenfalls eine oder mehrere Warteschlangeneinheiten WSU nach der erfindungsgemäßen Weiterverarbeitung der Datenpakete DP vorgesehen werden.

Die Datenpakete DP können unterschiedliche Längen aufweisen und zu unterschiedlichen Zeitpunkten t in der Kommunikationseinrichtung KE ankommen. Darüber hinaus können Datenpakete DP unterschiedlicher Verbindungen mit verschiedenen Übertragungsbandbreiten nacheinander in der paketorientierten Kommunikationseinrichtung KE ankommen. In Figur 1 ist beispielhaft eine einzelne Token-Bucket-Einheit TBU für eine Verbindung aus Gründen der Übersichtlichkeit dargestellt. Zur Weiterverarbeitung der unterschiedliche Längen aufweisenden Datenpakete DP sind ebenfalls unterschiedliche Datenmengen D_{DP} erforderlich, die durch die Token-Bucket-Einheit TBU, insbesondere durch die Byte-Credit-Einheit BCU zur Verfügung gestellt werden.

Die Token-Bucket-Einheit TBU, insbesondere die Byte-Credit-Einheit BCU weist eine Vielzahl von Datenmengen-Token T auf, die jeweils eine festgelegte Datenmenge repräsentieren. Hierbei wird durch die Anzahl N der in der Byte-Credit-Einheit BCU enthaltenen Datenmengen-Token T die maximale durch die Byte-Credit-Einheit BCU aktuell zuteilbare Datenmenge Dₘₐₓ bestimmt. Die technische Realisierung einer derartigen Byte-Credit-Einheit BCU kann auf unterschiedlichste Arten erfolgen, beispielsweise mit Hilfe von Zählerparameterwerten, die bei einem Hinzufügen eines Datenmengen-Tokens T um einen festgelegten Wert erhöht oder erniedrigt werden.

Die Datenmengen-Token T werden in der Token-Erzeugungseinheit TGU - gesteuert über die Time-Bucket-Einheit TMB - erzeugt und an die Byte-Credit-Einheit BCU weitergeleitet. Das in Figur 1 dargestellte Weiterleiten der Datenmengen-Token T ist eine schematische Darstellung, deren technische Realisierungen unterschiedliche Ausführungsformen zugrunde liegen können. Zur Zuteilung der für die Weiterverarbeitung eines Datenpaketes DP durch die Weiterverarbeitungseinrichtung DU erforderliche Datenmenge D_{DP} wird - ggf. nach dem von der Time-Bucket-Einheit TMB gesteuerten Nachfüllen der Byte-Credit-Einheit BCU - die der Datenmenge D_{DP} entsprechenden Anzahl k von Datenmengen-Token T aus der Byte-Credit-Einheit BCU entnommen.

Durch die in der Time-Bucket-Einheit TMB ausgeführte Bewertungsroutine BWR wird die Übertragungsbandbreitenzuteilung sowie das Auffüllen der Byte-Credit-Einheit BCU mit Datenmengen-Token T gesteuert. In der beispielsweise in der Time-Bucket-Einheit TMB angeordneten Speichereinheit SU werden die durch die Bewertungsroutine BWR ermittelten bzw. aktualisierten Parameterwerte gespeichert. Derartige Parameterwerte sind unter anderem die zur Weiterverarbeitung eines Datenpaketes DP erforderliche Datenmenge D_{DP} bzw. die dieser entsprechenden Anzahl k an Datenmengen-Token T, die Anzahl N der aktuell in der Token-Bucket-Einheit TBU vorhandenen Datenmengen-Token T, ein Verarbeitungszeitpunkt T_{now} sowie ein Tokenerzeugungszeitpunkt T_{B} und ein Tokenerzeugungszeitintervall TEI. Die Bedeutung sowie die Ermittlung und Aktualisierung der genannten Parameterwerte wird im folgenden näher erläutert.

Der Time-Bucket-Einheit TMB wird ein Tokenerzeugungszeitintervall TEI und ein Tokenerzeugungszeitpunkt T_{B} zugeordnet. Hierbei entspricht das Tokenerzeugungszeitintervall TEI der Zeitdauer, die für die Übertragung eines Datenpaketes einer festgelegten Länge bei der angestrebten Übertragungsbandbreite erforderlich ist. Beispielhaft kann diese Zeitdauer der für die Übertragung eines die maximal weiterverarbeitbaren Länge aufweisenden Datenpaketes erforderlichen Zeitdauer entsprechen. Der Tokenerzeugungszeitpunkt T_{B} definiert zusammen mit dem Verarbeitungszeitpunkt T_{now} den für die Weiterverarbeitung des Datenpaketes DP relevanten Füllstand der Time-Bucket-Einheit TMB, der im weiteren als Übertragungszeitintervall T_{V} bezeichnet wird. Der Tokenerzeugungszeitpunkt T_{B} wird bei jeder Erzeugung von Datenmengen-Token T in der Tokenerzeugungseinheit TGU entsprechend aktualisiert. Der Tokenerzeugungszeitpunkt T_{B} zusammen mit dem Tokenerzeugungszeitintervall TEI werden in der Speichereinheit SU der Time-Bucket-Einheit TMB gespeichert.

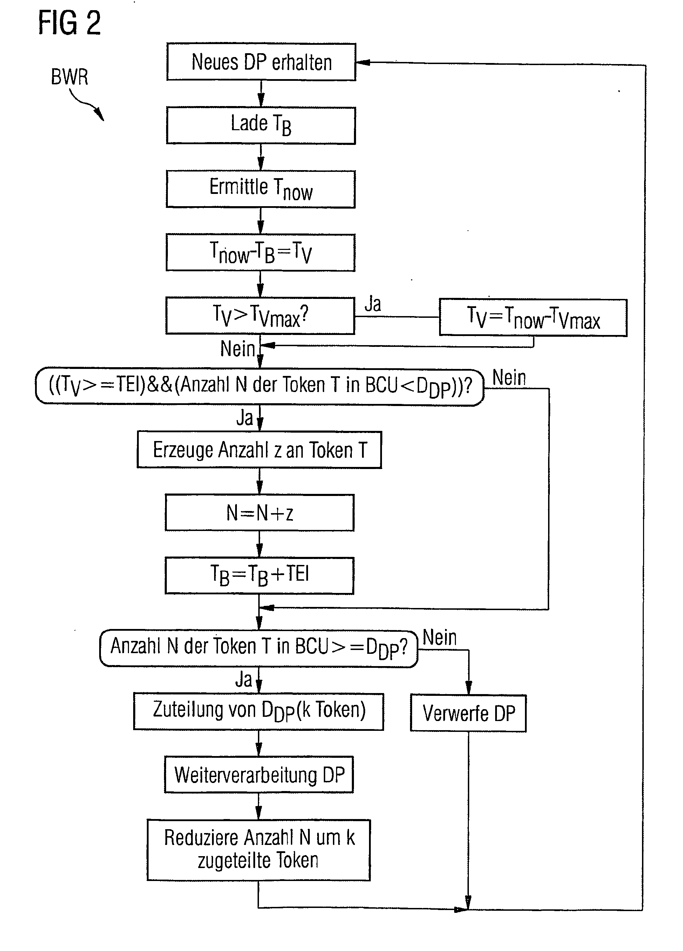

Der Ablauf des Verfahrens zur Übertragungsbandbreitenzuteilung wird beispielhaft in Figur 2 anhand eines schematischen Ablaufdiagrammes erläutert. Bei Eintreffen eines Datenpaketes DP in der paketorientierten Kommunikationseinrichtung KE wird durch die in Time-Bucket-Einheit TMB ausgeführte Bewertungsroutine BWR der in der Speichereinheit SU gespeicherte Tokenerzeugungszeitpunkt T_{B} geladen. Ferner wird durch die Bewertungsroutine BWR der Verarbeitungszeitpunkt T_{now} ermittelt. Der Verarbeitungszeitpunkt T_{now} wird beispielsweise dadurch ermittelt, daß beim Eintreffen eines neuen Datenpaketes DP automatisch durch die Bewertungsroutine BWR dem Verarbeitungszeitpunkt T_{now} der aktuelle Wert der Systemzeit t zugewiesen wird.

Der für das zu verarbeitende Datenpaket DP ermittelte Verarbeitungszeitpunkt T_{now} wird mit dem Tokenerzeugungszeitpunkt T_{B} verglichen und hierdurch das verfügbare Übertragungszeitintervall T_{V} ermittelt. In Figur 2 wird beispielhaft zur Ermittlung des verfügbaren Übertragungszeitintervalls T_{V} von dem ermittelten Verarbeitungszeitpunkt T_{now} der Tokenerzeugungszeitpunkt T_{B} subtrahiert. Das verfügbare Übertragungszeitintervalls T_{V} wird mit einem individuell festgelegten maximalen Übertragungszeitintervall T_{Vmax} verglichen und bei einem Überschreiten des Maximalwert T_{Vmax} durch das verfügbare Übertragungszeitintervall T_{V} diesem der Maximalwert T_{Vmax} zugewiesen. Die Begrenzung des Übertragungszeitintervalls T_{V} dient zur Begrenzung des maximalen Datenburst-Volumens. Alternativ kann die Begrenzung auch an einer anderen Stelle des Verfahrens durchgeführt werden.

Im Anschluß wird überprüft, ob die Byte-Credit-Einheit BCU über eine genügend hohe Anzahl N von Datenmengen-Token T verfügt, um das zu verarbeitende Datenpaket DP weiter zu verarbeiten. Nur wenn dies nicht der Fall ist, wird das Überschreiten des Tokenerzeugungszeitintervalls TEI durch das verfügbare Übertragungszeitintervall T_{V} überprüft. Überschreitet das verfügbare Übertragungszeitintervall T_{V} das Tokenerzeugungszeitintervalls TEI, dann ist eine Umwandlung von verfügbarer Übertragungszeit in Datenmengen-Token T innerhalb der zuteilbaren Übertragungsbandbreite möglich und ein Auffüllen der Byte-Credit-Einheit BCU vor der Weiterverarbeitung des Datenpaketes DP erforderlich. Hierzu wird eine festgelegte Anzahl z von Datenmengen-Token T in der Tokenerzeugungseinheit TGU erzeugt und in die Byte-Credit-Einheit BCU geladen. Anschließend wird der Füllstand bzw. die Anzahl N der in der Byte-Credit-Einheit BCU vorliegenden Datenmengen-Token T aktualisiert und in der Speichereinheit SU gespeichert. Die Anzahl z wird hierbei derart gewählt, dass die Anzahl z der Datenmengen-Token T ausreicht, um ein Datenpaket DP mit der maximal zulässigen Datenpaketlänge weiterzuverarbeiten. Alternativ (nicht in Figur 1-3 dargestellt) kann z auch kleiner gewählt werden, wobei hierbei das Auffüllen der Byte-Credit-Einheit BCU ggf. mehrfach durchgeführt wird.

Gemäß Figur 2 wird zusätzlich der Tokenerzeugungszeitpunkt T_{B} aktualisiert. Hierzu wird beispielsweise zum Tokenerzeugungszeitpunkt T_{B} das Tokenerzeugungszeitintervall TEI betragsmäßig addiert und hiermit ein aktualisierter Tokenerzeugungszeitpunkt T*_{B} ermittelt, der bei der Verarbeitung des nachfolgenden Datenpaketes DP als Tokenerzeugungszeitpunkt T_{B} verwendet wird.

Im Anschluß wird gemäß der Bewertungsroutine BWR überprüft, ob die in der Byte-Credit-Einheit BCU verfügbare Anzahl N von Datenmengen-Token T für die Weiterverarbeitung des Datenpaketes DP ausreicht. Hierzu wird die Anzahl N der in der Token-Bucket-Einheit TBU verfügbaren Datenmengen-Token T mit der für die Weiterverarbeitung des Datenpaketes DP erforderlichen Datenmenge D_{DP} bzw. mit der Anzahl k der für die Weiterverarbeitung erforderlichen Datenmengen-Token T verglichen und abhängig vom Vergleichsergebnis das Datenpaket DP verworfen (oder alternativ in der Warteschlageneinheit WSU belassen) oder die erforderliche Datenmenge D_{DP} zugeteilt. Überschreitet die verfügbare Anzahl N von Datenmengen-Token T die für die Zuteilung der Datenmenge D_{DP} erforderlichen Anzahl k von Datenmengen-Token T, dann wird im nächsten Schritt die Anzahl N der in der Token-Bucket-Einheit TBU verfügbaren Datenmengen-Token T um die Anzahl k reduziert und hierdurch die Datenmenge D_{DP} zugeteilt. Das verarbeitete Datenpaket DP wird an den Ausgang der paketorientierten Kommunikationseinrichtung KE gesteuert. Bei einem Unterschreiten der verfügbaren Anzahl N von Datenmengen-Token T, d.h. Anzahl N < Anzahl k, wird das Datenpaket DP verworfen oder alternativ auf unterschiedliche Art weiterverarbeitet.

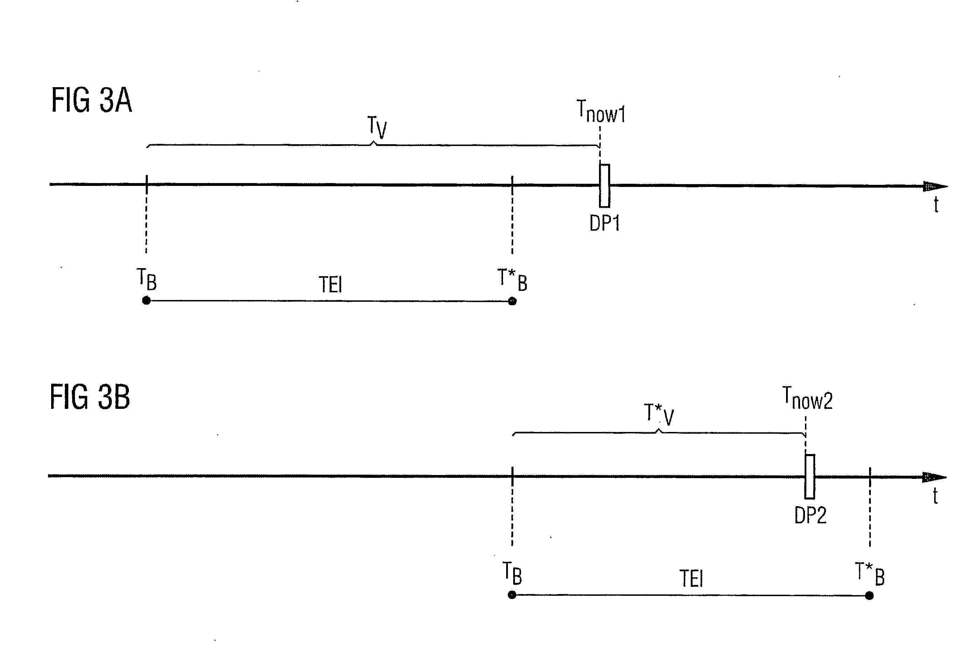

In Figur 3a,b wird in zwei Diagrammen die Weiterverarbeitung von zwei unterschiedliche Verarbeitungszeitpunkte T_{now1}, T_{now2} aufweisenden Datenpaketen DP1, DP2 in der paketorientierten Kommunikationseinrichtung KE beispielhaft dargestellt. Hierzu wird dem ersten und zweiten Verarbeitungszeitpunkt T_{now1}, T_{now2} des ersten und zweiten Datenpaketes DP1, DP2 jeweils der zugehörige Wert der Systemzeit t zugeordnet. In dem Diagrammen ist der Verlauf der Systemzeit t jeweils in Form einer Gerade dargestellt, an der jeweils der Verarbeitungszeitpunkt T_{now1}, T_{now2} des ersten bzw. zweiten Datenpaketes DP1,DP2 sowie der Tokenerzeugungszeitpunkt T_{B}, der aktualisierte Tokenerzeugungszeitpunkt T*_{B} und das Tokenerzeugungszeitintervall TEI angetragen sind. Für die Übertragung des ersten und zweiten Datenpaketes DP1, DP2 ist eine erste und zweite Datenmenge D_{DP1},D_{DP2} erforderlich. Hierzu sind eine erste und zweite Anzahl k1, k2 von Datenmengen-Token T zuzuteilen.

Gemäß Figur 3a wird im Zuge der Verarbeitung des ersten Datenpaketes DP1 - wie der in Figur 2 dargestellten Bewertungsroutine BWR zu entnehmen ist und wie zuvor erläutert wurde - der Tokenerzeugungszeitpunkt T_{B} aus der Speichereinheit CU der Time-Bucket-Einheit TMB geladen. Ferner wird der erste Verarbeitungszeitpunkt T_{now1} mit dem geladenen Tokenerzeugungszeitpunkt T_{B} verglichen und somit das verfügbare Übertragungszeitintervall T_{V} ermittelt. Im dargestellten Fall überschreitet das verfügbare Übertragungszeitintervall T_{V} das Tokenerzeugungsintervall TEI, so dass eine Erzeugung weiterer Datenmengen-Token T, d.h. ein "Auffüllen" der Byte-Credit-Einheit BCU, möglich ist. Hierbei wird angenommen, daß die Byte-Credit-Einheit BCU nicht hinreichend viele Datenmengen-Token T enthält, und daß daher weitere Datenmengen-Token K zur Auffüllung dieser erzeugt werden müssen. Dies wird gemäß dem Ablaufdiagramm in Figur 2 durchgeführt und somit ein aktualisierter Tokenerzeugungszeitpunkt T*_{B} ermittelt.

Nach dem Auffüllen der Byte-Credit-Einheit BCU wird dem ersten Datenpaket DP1 die für dessen Übertragung erforderliche erste Datenmenge D_{DP1} in Form der ersten Anzahl k1 an Datenmengen-Token T zugeteilt. Die Anzahl N der in Byte-Credit-Einheit BCU verfügbaren Datenmengen-Token T wird anschließend aktualisiert, d.h. um die zugeteilte erste Anzahl k1 von Datenmengen-Token T reduziert, sowie die aktualisierte Anzahl N in der Speichereinheit CU gespeichert.

Gemäß Figur 3b wird das zweite Datenpaket DP2 zeitlich nach dem ersten Datenpaket DP1 in der paketorientierten Kommunikationseinrichtung KE verarbeitet, so daß diesem ein zweiter Verarbeitungszeitpunkt T_{now2} zugeteilt wird, der beispielsweise betragsmäßig größer ist als der erste Verarbeitungszeitpunkt T_{now1}. Gemäß der in Figur 2 dargestellten Bewertungsroutine BWR wird bei der Weiterverarbeitung des zweiten Datenpaketes DP2 wiederum zunächst der aktualisierte Tokenerzeugungszeitpunkt T*_{B} aus der Speichereinheit SU der Time-Bucket-Einheit TMB geladen und aus die Zeitdifferenz zwischen dem zweiten Verarbeitungszeitpunkt T_{now2} und dem aktualisierten Tokenerzeugungszeitpunkt T*_{B} ermittelt. Die ermittelte Zeitdifferenz entspricht wiederum dem in der Time-Bucket-Einheit TMB verfügbaren Übertragungsintervall T*_{V}. Das derart ermittelte verfügbaren Übertragungsintervall T*_{V} wird mit dem Tokenerzeugungszeitintervall TEI verglichen.

Aufgrund der kurz vorher durchgeführten Umwandlung von verfügbarer Übertragungszeit in Datenmengen-Token T überschreitet das Tokenerzeugungsintervall TEI das verfügbare Übertragungszeitintervall T*_{V}, d.h. die Byte-Credit-Einheit BCU darf nicht aufgefüllt werden. Ist trotzdem die zuteilbare Datenmenge D_{DP} der Byte-Credit-Einheit BCU in Form von hinreichend vielen Datenmengen-Token T verfügbar, dann wird das zweite Datenpaket DP2 weiterverarbeitet. Hierzu wird die zweite Anzahl k2 an Datenmengen-Token T der Byte-Credit-Einheit BCU entnommen und die zweite Bandbreite D_{DP2} zugeteilt. Anschlie-βend wird wiederum die Anzahl N der in der Byte-Credit-Einheit BCU verfügbaren Datenmengen-Token T aktualisiert sowie in der Speichereinheit CU gespeichert.

Die Zuteilung von Datenmengen D_{DP} mit Hilfe der Byte-Credit-Einheit BCU ist keinesfalls auf die Granularität "Byte" beschränkt, sondern es können für den jeweiligen Anwendungsfall zweckmäßige Granularitäten wie beispielsweise "Bit" oder "X-Bits" verwendet werden.

Darüber hinaus können in einer paketorientierten Kommunikationseinrichtung KE mehrere Token-Bucket-Einheiten (TBU) vorgesehen werden, denen jeweils zumindest ein übertragungsbandbreitenindividuelles Tokenerzeugungszeitintervall TEI und ein Tokenerzeugungszeitpunkt T_{B} zugeordnet werden. Somit ist das beschriebene Verfahren bei der Übertragungsbandbreitenzuteilung von mehreren unterschiedlichen Übertragungsraten aufweisenden Verbindungen geeignet, wobei pro Verbindung ein mindestens aus dem jeweiligen Tokenerzeugungszeitintervall TEI und dem jeweiligen Tokenerzeugungszeitpunkt T_{B} bestehender Parametersatz vorgesehen wird, der mit Hilfe der Bewertungsroutine BWR ausgewertet und aktualisiert wird.

Die Länge des Tokenerzeugungszeitintervalls TEI wird beispielsweise derart gewählt, daß die Länge des Tokenerzeugungszeitintervalls TEI der Länge des für die Verarbeitung eines die maximale zuteilbare Datenmenge Dₘₐₓ aufweisenden Datenpaketes DP erforderliche Übertragungszeitintervalls T_{Vmax} entspricht, d.h. dem Tokenerzeugungszeitintervall TEI entspricht die Anzahl an Datenmengen-Token T, die für die Weiterverarbeitung eines die maximale Paketlänge aufweisenden Datenpaketes DP erforderlich ist. Die Größe des Tokenerzeugungszeitintervalls kann verbindungsindividuell festgelegt werden. Ein typischer Wert hierfür liegt bei einer vorgesehenen Bandbreitenbegrenzung auf 20 Mbit/s und einer maximalen Paketlänge von 1600 Bytes beispielsweise bei 640 µs [(1600 Bytes*8 Bit/Byte)/20 000 000 Bit/s].

## Patentansprüche

1. Verfahren zur Übertragungsbandbreitenzuteilung in einer paketorientierten Kommunikationseinrichtung (KE), die mindestens eine aus einer Time-Bucket-Einheit (TMB) und einer Byte-Credit-Einheit (BCU) bestehende Token-Bucket-Einheit (TBU) aufweist, wobei in der Byte-Credit-Einheit (BCU) jeweils eine festgelegte Datenmenge repräsentierende Datenmengen-Token (T) gespeichert sind,
- bei dem der Time-Bucket-Einheit (TMB) ein Tokenerzeugungszeitintervall (TEI) und ein Tokenerzeugungszeitpunkt (T_{B}) zugeordnet werden,
- bei dem jedem Datenpaket (DP1) vor der Weiterverarbeitung ein Verarbeitungszeitpunkt (T_{now}) zugeordnet wird,
- bei dem das in der Time-Bucket-Einheit (TMB) für die Weiterverarbeitung eines Datenpaketes (DP1) verfügbare Übertragungszeitintervall (T_{V}) ermittelt wird,
- bei dem ausschließlich bei einem Überschreiten des Tokenerzeugungszeitintervalls (TEI) durch das ermittelte verfügbare Übertragungszeitintervall (T_{V}) ein Teil des verfügbaren Übertragungszeitintervalls (T_{V}) in Datenmengen-Token (T) umgewandelt wird und diese in der Byte-Credit-Einheit (BCU) gespeichert werden sowie der Tokenerzeugungszeitpunkt (T_{B}) aktualisiert wird,
- bei dem die zur Weiterverarbeitung des Datenpaketes (DP1) erforderliche Datenmenge (D_{DP1}) derart zugeteilt wird, daß die der Datenmenge (D_{DP1}) entsprechende Anzahl (k1) von Datenmengen-Token (T) der Byte-Credit-Einheit (BCU) entnommen werden.

2. Verfahren nach Anspruch 1,
**dadurch gekennzeichnet,**
**daß** das verfügbare Übertragungszeitintervall (T_{V}) durch Bildung der Zeitdifferenz zwischen Verarbeitungszeitpunkt (T_{now}) und Tokenerzeugungszeitpunkt (T_{B}) ermittelt wird.

3. Verfahren nach Anspruch 1 oder 2,
**dadurch gekennzeichnet,**
**daß** die aktuell zuteilbare Datenmenge (Dₘₐₓ) durch die Anzahl (N) der in der Byte-Credit-Einheit (BCU) gespeicherten Datenmengen-Token (T) sowie durch das noch nicht in Datenmengen-Token (T) umgewandelte verfügbare Übertragungszeitintervall (T_{V}) festgelegt wird.

4. Verfahren nach einem der Ansprüche 1 bis 3,
**dadurch gekennzeichnet,**
**daß** bei der Umwandlung eines Teiles des verfügbaren Übertragungszeitintervalls (T_{V}) in Datenmengen-Token (T) der Tokenerzeugungszeitpunkt (T_{B}) **dadurch** aktualisiert wird, daß zum Tokenerzeugungszeitpunkt (T_{B}) das Tokenerzeugungszeitintervall (TEI) addiert wird.

5. Verfahren nach einem der Ansprüche 1 bis 4,
**dadurch gekennzeichnet,**
**daß** zur Weiterverarbeitung eines Datenpaketes (DP) gegebenenfalls mehrfach eine Umwandlung eines Teiles des verfügbaren Übertragungszeitintervalls (T_{V}) in Datenmengen-Token (T) erfolgt.

6. Verfahren nach einem der Ansprüche 1 bis 5,
**dadurch gekennzeichnet,**
**daß** die Länge des Tokenerzeugungszeitintervalls (TEI) derart gewählt wird, daß die Länge des Tokenerzeugungszeitintervalls (TEI) der Länge des für die Verarbeitung eines die maximale zuteilbare Datenmenge (Dₘₐₓ) aufweisenden Datenpaketes (DP) erforderliche Übertragungszeitintervalls (Tₘₐₓ) entspricht.

7. Verfahren nach einem der Ansprüche 1 bis 5,
**dadurch gekennzeichnet,**
**daß** die Anzahl (N) der in einer Byte-Credit-Einheit (BCU) gespeicherten Datenmengen-Token (T) einen festgelegten Maximalwert nicht überschreitet und einen festgelegten Minimalwert nicht unterschreitet.

8. Verfahren nach einem der Ansprüche 1 bis 6,
**dadurch gekennzeichnet,**
**daß** durch das maximale Übertragungszeitintervall (T_{Vmax}) die durchschnittlich verarbeitbare maximale Anzahl von unmittelbar hintereinander in der Kommunikationseinrichtung (KE) ankommenden Datenpaketen (DP) festgelegt wird.

9. Verfahren nach einem der Ansprüche 1 bis 7,
**dadurch gekennzeichnet,**
**daß** bei mehreren in der paketorientierten Kommunikationeinrichtung (KE) vorgesehenen Token-Bucket-Einheiten (TBU) jeder der Time-Bucket-Einheiten (TMU) ein übertragungsbandbreitenindividuelles Tokenerzeugungszeitintervall (TEI) zugeordnet wird.

10. Verfahren nach einem der Ansprüche 1 bis 9,
**dadurch gekennzeichnet,**
**daß** bei einem Überschreiten des Tokenerzeugungszeitintervalls (TEI) durch das ermittelte verfügbare Übertragungszeitintervall (T_{V}) eine festgelegte Anzahl (z) von Datenmengen-Token (T) erzeugt wird.

11. Verfahren nach Anspruch 10,
**dadurch gekennzeichnet,**
**daß** die festgelegte Anzahl (z) von Datenmengen-Token (T) durch die Datenmenge (D_{DP}) festgelegt wird, die zur Weiterverarbeitung eines die maximal verarbeitbare Paketlänge aufweisenden Datenpaketes erforderlich ist.

12. Verfahren nach einem der Ansprüche 1 bis 11,
**dadurch gekennzeichnet,**
**daß** bei einer die zur Weiterverarbeitung eines Datenpaketes erforderlichen Datenmenge (D_{DP}) unterschreitenden Anzahl (N) der in der Byte-Credit-Einheit (BCU) gespeicherten Datenmengen-Token (T) das weiterzuverarbeitende Datenpaket (DP) nicht weiterverarbeitet oder unterschiedlich weiterverarbeitet oder verworfen wird.

13. Verfahren nach einem der Ansprüche 1 bis 14,
**dadurch gekennzeichnet,**
**daß** bei einem N-fachen Überschreiten des Tokenerzeugungszeitintervalls (TEI) durch die verfügbare Übertragungszeit (T_{V}) zum Tokenerzeugungszeitpunkt (T_{B}) das N-fache des Tokenerzeugunszeitintervalls (TEI) addiert wird.

## Claims

1. Method for transmission bandwidth allocation in a packet-oriented communications facility (KE) which features one token-bucket unit (TBU) made up of a time-bucket unit (TMB) and a byte-credit unit (BCU), with a data volume token (T) representing a defined data volume being stored in the byte-credit unit (BCU),
- in which the time-bucket unit (TMB) is assigned a token generation time interval (TEI) and a token generation time (T_{B}),
- in which each data packet, (DP1) is assigned a processing time (T_{now}) before subsequent processing,
- in which the transmission time interval (T_{V}) available in the time-bucket unit (TMB) for the subsequent processing of a data packet (DP1) is determined,
- in which exclusively if the token generation time interval (TEI) is exceeded by the available transmission time interval (T_{V}) a part of the available transmission time interval (T_{V}) is converted into data volume tokens (T) and these are stored in the byte-credit unit (BCU) and the token generation time (T_{B}) is also updated,
- in which the data volume (D_{DP1}) required for subsequent processing of the data packet (DP1) is allocated such that the number (k1) of data volume tokens (T) corresponding to the data volume (D_{DP1}) is taken from the byte-credit unit (BCU).

2. Method according to claim 1,
**characterized in that**
the available transmission time interval (T_{V}) is determined by forming the time difference between processing time (T_{now}) and token generation time (T_{B}).

3. Method in accordance with claim 1 or 2,
**characterized in that**
the currently allocatable data volume (Dₘₐₓ) is defined by the number (N) of data volume tokens (T) stored in the byte-credit unit (BCU) as well as by the available transmission time interval (T_{V}) not yet converted into data volume tokens.

4. Method in accordance with one of the claims 1 to 3,
**characterized in that**,
for the conversion of a part of the available transmission time interval (T_{V}) into data volume tokens (T) the token generation time (T_{B}) is updated by the token generation time interval (TEI) being added to the token generation time (T_{B}).

5. Method in accordance with one of the claims 1 to 4,
**characterized in that**,
for the subsequent processing of a data packet (DP) if necessary a part of the available transmission time interval (Tᵥ) is converted into data volume tokens (T) a number of times.

6. Method in accordance with one of the claims 1 to 5,
**characterized in that**
the length of the token generation time interval (TEI) is selected such that the length of the token generation time interval (TEI) corresponds to the length of the transmission time interval (Tₘₐₓ) required for processing a data packet (DP) featuring the maximum allocatable data volume (Dₘₐₓ).

7. Method in accordance with one of the claims 1 to 5,
**characterized in that**
the number (N) of the data volume tokens (T) stored in a byte-credit unit (BCU) does not exceed a defined maximum value and does not fall below a defined minimum value.

8. Method in accordance with one of the claims 1 to 6,
**characterized in that**
the maximum transmission time interval (Tᵥₘₐₓ) defines the average maximum number of data packets (DP) arriving immediately after one another in the communication device (KE) .

9. Method in accordance with one of the claims 1 to 7,
**characterized in that**,
where there is provision for a number if token-bucket units (TBU) in the packet-oriented communications facility (KE) an individual transmission bandwidth token generation time interval (TEI) is assigned to each of the time bucket units (TMU).

10. Method in accordance with one of the claims 1 to 9,
**characterized in that**,
if the available transmission time interval (Tᵥ) determined falls below the token generation time interval (TEI) a fixed number (z) of data volume tokens (T) will be created.

11. Method according to claim 10,
**characterized in that**
the defined number (z) of data volume tokens (T) is defined by the data volume (D_{DP}) which is required for the subsequent processing of a data packet having the maximum processable packet length.

12. Method in accordance with one of the claims 1 to 11,
**characterized in that**,
for a number (N) of the data volume tokens (T) stored in the byte-credit unit (BCU) which falls below the data volume (D_{DP}) required for subsequent processing of a data packet the data packet (DP) to be subsequently processed is not subsequently processed or is processed in a different way or discarded.

13. Method in accordance with one of the claims 1 to 14,
**characterized in that**,
if the token generation time interval (TEI) is undershot N times by the transmission time (T_{V}) available for token generation (T_{B}) the N-multiple of the token generation time interval (TEI) is added.

## Revendications

1. Procédé d'attribution de largeur de bande de transmission dans un dispositif de communication orienté paquets (KE) qui présente au moins une unité seau de jetons (TBU) constituée d'une unité seau de temps (TMB) et d'une unité crédit d'octets (BCU), des jetons de quantités de données (T) représentant une quantité de données déterminée étant respectivement mémorisés dans l'unité crédit d'octets (BCU),
- dans lequel un intervalle de temps de génération de jetons (TEI) et un moment de génération de jetons (T_{B}) sont associés à l'unité seau de temps (TMB),
- dans lequel un moment de traitement (T_{now}) est attribué à chaque paquet de données (DP1) avant la poursuite du traitement,
- dans lequel l'intervalle de temps de transmission (T_{V}) disponible dans l'unité seau de temps (TMB) pour la poursuite du traitement d'un paquet de données (DP1) est déterminé,
- dans lequel, exclusivement lors d'un dépassement de l'intervalle de temps de génération de jetons (TEI) par l'intervalle de temps de transmission déterminé disponible (T_{V}), une partie de l'intervalle de temps de transmission disponible (T_{V}) est convertie en jetons de quantités de données (T) et dans lequel ceux-ci sont mémorisés dans l'unité crédit d'octets (BCU) et le moment de génération de jetons (T_{B}) est actualisé,
- dans lequel la quantité de données (D_{DP1}) nécessaire à la poursuite du traitement du paquet de données (DP1) est attribuée de telle manière que le nombre (k1) de jetons de quantités de données (T), correspondant à la quantité de données (D_{DP1}) est prélevé sur l'unité crédit d'octets (BCU).

2. Procédé selon la revendication 1,
**caractérisé en ce**
**que** l'intervalle de temps de transmission disponible (T_{V}) est déterminé par formation de la différence de temps entre le moment de traitement (T_{now}) et le moment de génération de jetons (T_{B}) .

3. Procédé selon la revendication 1 ou 2,
**caractérisé en ce**
**que** la quantité de données momentanément attribuable (Dₘₐₓ) est déterminée par le nombre (N) de jetons de quantités de données (T) mémorisés dans l'unité crédit d'octets (BCU) ainsi que par l'intervalle de temps de transmission disponible (T_{V}), pas encore converti en jetons de quantités de données (T).

4. Procédé selon l'une quelconque des revendications 1 à 3,
**caractérisé en ce**
**que** lors de la conversion, en jetons de quantités de données (T), d'une partie de l'intervalle de temps de transmission disponible (T_{V}), le moment de génération de jetons (T_{B}) est actualisé du fait que l'intervalle de temps de génération de jetons (TEI) est additionné au moment de génération de jetons (T_{B}) .

5. Procédé selon l'une quelconque des revendications 1 à 4,
**caractérisé en ce**
**que** pour la poursuite du traitement d'un paquet de données (DP), une conversion d'une partie de l'intervalle de temps de transmission disponible (T_{V}) en jetons de quantités de données (T) est le cas échéant réalisée plusieurs fois.

6. Procédé selon l'une quelconque des revendications 1 à 5,
**caractérisé en ce**
**que** la longueur de l'intervalle de temps de génération de jetons (TEI) est sélectionnée de telle manière que la longueur de l'intervalle de temps de génération de jetons (TEI) corresponde à la longueur de l'intervalle de temps de transmission (Tₘₐₓ) nécessaire au traitement d'un paquet de données (DP) présentant la quantité de données maximale (Dₘₐₓ) attribuable.

7. Procédé selon l'une quelconque des revendications 1 à 5,
**caractérisé en ce**
**que** le nombre (N) de jetons de quantités de données (T) mémorisés dans l'unité crédit d'octets (BCU) ne dépasse pas une valeur maximale déterminée et qu'il n'est pas inférieur à une valeur minimale déterminée.

8. Procédé selon l'une quelconque des revendications 1 à 6,
**caractérisé en ce**
**que** le nombre maximal, traitable en moyenne, de paquets de données (DP) entrant directement les uns après les autres dans le dispositif de communication (KE) est déterminé par l'intervalle de temps de transmission maximal (T_{Vmax}).

9. Procédé selon l'une quelconque des revendications 1 à 7,
**caractérisé en ce**
**que** dans plusieurs unités seau de jetons (TBU) prévues dans le dispositif de communication orienté paquets (KE), un intervalle de temps de génération de jetons (TEI), individuel à la largeur de bande de transmission, est attribué à chacune des unités seau de temps (TMU).

10. Procédé selon l'une quelconque des revendications 1 à 9,
**caractérisé en ce**
**que** lors d'un dépassement de l'intervalle de temps de génération de jetons (TEI) par l'intervalle de temps de transmission disponible (T_{V}) déterminé, un nombre déterminé (z) de jetons de quantités de données (T) est généré.

11. Procédé selon la revendication 10,
**caractérisé en ce**
**que** le nombre déterminé (z) de jetons de quantités de données (T) est déterminé par la quantité de données (D_{DP}) nécessaire à la poursuite du traitement d'un paquet de données présentant la longueur de paquet traitable au maximum.

12. Procédé selon l'une quelconque des revendications 1 à 11,
**caractérisé en ce**
**que** en cas d'un nombre (N), inférieur à la quantité de données (D_{DP}) nécessaire à la poursuite du traitement d'un paquet de données, de jetons de quantités de données (T) mémorisés dans l'unité Crédit d'octets (BCU), le paquet de données (DP) devant être traité n'est pas traité ou est traité différemment ou est rejeté.

13. Procédé selon l'une quelconque des revendications 1 à 14,
**caractérisé en ce**
**qu'**en cas d' un dépassement de N fois de l'intervalle de temps de génération de jetons (TEI) par le temps de transmission disponible (T_{V}), l'intervalle de temps de génération de jetons (TEI) est additionné N fois au moment de génération de jetons (T_{B}).
